# EUROPEAN PATENT APPLICATION

(11) **EP 1 838 072 A2**
(43) Date of publication of application: **26.09.2007**
(21) Application number: 07104124.8
(22) Date of filing: 14.03.2007
(51) Int. Cl.: H04M 1/02

(54) **Hinge apparatus for portable terminal**

(30) Priority: 22.03.2006 KR 20060026141
(71) Applicant: Samsung Electronics Co., Ltd., Yeongtong-gu Suwon-si, Gyeonggi-do (KR)
(72) Inventor: Cho, Woo-Chul c/o samsung Electronics Co. Ltd, Gyeonggi-do (KR); Kim, Yong-Jae, c/o samsung electronics Co., Ltd, Gyeonggi-do (KR); Jeun, Young-Mok, c/o samsung Electronics Co., Ltd., Gyeonggi-do (KR); Cho, Jin-Hee, c/o samsung Electronics., Ltd, Gyeonggi-do (KR); Kim, Sang-Gook c/o Samsung Electronics Co. ,, Gyeonggi-do (KR)
(74) Representative: Zimmer, Franz-Josef

(57) **Abstract**

A hinge apparatus for coupling a pair of housings of a portable terminal to each other so that the housings can rotate and unfold from each other. The apparatus includes first sun gears coupled to the housings, respectively; second sun gears positioned between the first sun gears so as to interlock the first sun gears; and a stopper unit connected to at least one of the first and second sun gears and adapted to suppress rotation of the first and second sun gears, when the housings are folded on each other while facing each other, so that rotation of the housings is limited.

## Description

### BACKGROUND OF THE INVENTION

### 1. Field of the Invention

The present invention relates to a portable terminal, and more particularly to a hinge apparatus adapted to couple a pair of housings to each other so that they can rotate about different hinge axes and to limit their rotation, when they are folded on each other, by a stopper unit.

### 2. Description of the Related Art

In general, portable terminals are classified into bar-type terminals, flip-type terminals, and folder-type terminals according to their appearance.

The bar-type terminals have data input/output means and transmitter/receiver units mounted on a single housing. They have a problem in that the data input means, particularly a keypad, is exposed all the time and is vulnerable to erroneous operation. In addition, the fact that a distance must be secured between the transmitter and receiver units limits the degree of compactness of the terminals.

The flip-type terminals have a body, a flip, and a hinge module for connecting the body and the flip to each other. The body is provided with data input/output means and transmitter/receiver units. The flip covers the data input means, particularly a keypad, and prevents erroneous operation. However, the degree of compactness of the flip-type terminals is also limited by the fact that a distance must be secured between the transmitter and receiver units, as in the case of the bar-type terminals.

The folder-type terminals have a body, a folder, and a hinge module for rotatably connecting the body and the folder to each other so that the folder is rotated to open/close the terminals. In a standby mode, the folder is folded on the body and prevents erroneous operation of the keypad. In a speech mode, the folder is unfolded from the body so as to provide a sufficient distance between the transmitter and receiver units. As such, the folder-type terminals are advantageous due to their compactness and, for this reason, have prevailed in the portable terminal industry.

In the case of a flip-type or folder-type terminal, the flip or folder receives force from the hinge module, which rotatably connects the flip or folder to the body, in such a manner that, if the flip or folder has been rotated at least a predetermined angle, it is automatically unfolded without additional force and, if not, it remains folded on the body.

Meanwhile, telecommunication services using portable terminals previously have been limited to voice communication and short text transmission services in the initial stage of development. However, they are rapidly expanding and now include entertainment services, such as games, cartoons, and bell sounds, as well as multimedia services, such as mobile images, audio-on-demand services, and video-on-demand services.

In line with the diversification of telecommunication services, portable terminals are increasingly required to incorporate corresponding functions. For example, when users want to enjoy games, they expect that their terminals can be operated easily and, in the case of multimedia services (e.g. mobile images), the terminals are expected to provide a large screen and high-quality sound.

However, conventional portable terminals are not suitable for games, due to limitations in their shape. In addition, they cannot properly provide multimedia services, because they have initially been developed for voice communication.

### SUMMARY OF THE INVENTION

Accordingly, the present invention has been made to solve the above-mentioned problems occurring in the prior art, and an object of the present invention is to provide a hinge apparatus for a portable terminal capable of diversifying the design of the terminal so that multimedia services can be provided properly.

Another object of the present invention is to provide a hinge apparatus for a portable terminal adapted to couple a pair of housings to each other so that they can rotate about different hinge axes and, when one of them rotates, the other rotates accordingly.

Still another object of the present invention is to provide a hinge apparatus for a portable terminal adapted to rotatably couple a pair of housings to each other so that, when they are folded on each other, their rotation is limited.

In order to accomplish these objects, there is provided a hinge apparatus for coupling a pair of housings of a portable terminal to each other so that the housings can rotate and unfold from each other, the apparatus including first sun gears coupled to the housings; second sun gears positioned between the first sun gears so as to interlock the first sun gears; and a stopper unit connected to at least one of the first and second sun gears and adapted to suppress rotation of the first and second sun gears, when the housings are folded on each other while facing each other, so that rotation of the housings is limited.

### BRIEF DESCRIPTION OF THE DRAWINGS

The above and other objects, features, and advantages of the present invention will be more apparent from the following detailed description taken in conjunction with the accompanying drawings, in which:
FIG. 1 is a perspective view of a portable terminal having a hinge apparatus according to a first embodiment of the present invention;
FIG. 2 is a perspective view of the portable terminal shown in FIG. 1 when unfolded;
FIG. 3 is an exploded perspective view of the hinge apparatus shown in FIG. 1;
FIG. 4 is a perspective view of major components of the hinge apparatus shown in FIG. 1;
FIG. 5 is a perspective view of major components of a hinge apparatus according to a second embodiment of the present invention;
FIG. 6 is a perspective view of the hinge apparatus shown in FIG. 5 when viewed in another direction;
FIG. 7 is a perspective view illustrating the construction of a stopper unit of the hinge apparatus shown in FIG. 5;
FIGS. 8 and 9 illustrate the operation of the stopper unit of the hinge apparatus shown in FIG. 7;
FIG. 10 is an assembled perspective view of the hinge apparatus shown in FIG. 5;
FIG. 11 is a perspective view of major components of a hinge apparatus for a portable terminal according to a third embodiment of the present invention;
FIG. 12 is a perspective view illustrating the construction of major components of the hinge apparatus shown in FIG. 11;
FIG. 13 is a perspective view illustrating the construction of a stopper unit of the hinge apparatus shown in FIG. 11;
FIG. 14 is an exploded perspective view illustrating the construction of the stopper unit shown in FIG. 13;
FIG. 15 is a perspective view illustrating the construction of an alternative stopper unit of the hinge apparatus shown in FIG. 11; and
FIG. 16 is an exploded perspective view illustrating the construction of the hinge apparatus shown in FIG. 14.

### DETAILED DESCRIPTION OF THE PREFERRED EMBODIMENTS

Hereinafter, preferred embodiments of the present invention will be described with reference to the accompanying drawings. In the following description of the present invention, a detailed description of known functions and configurations incorporated herein is omitted to avoid making the subject matter of the present invention unclear.

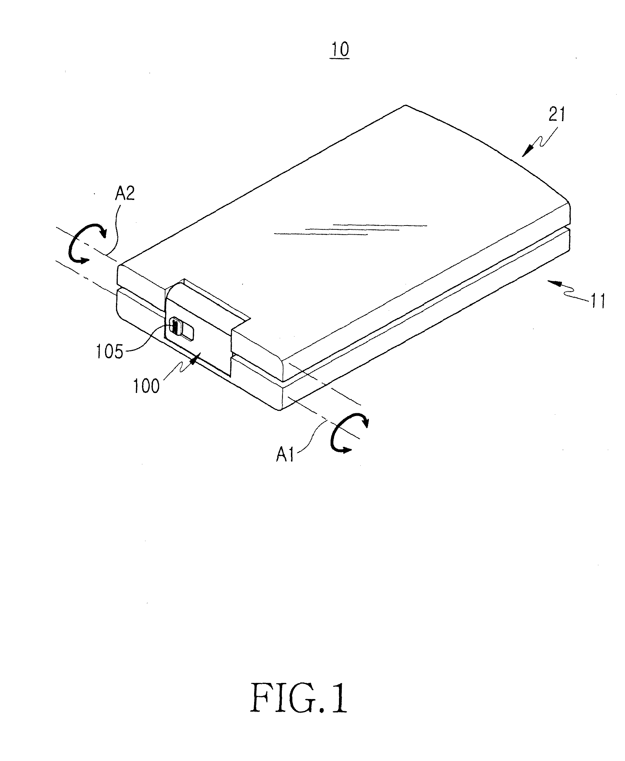

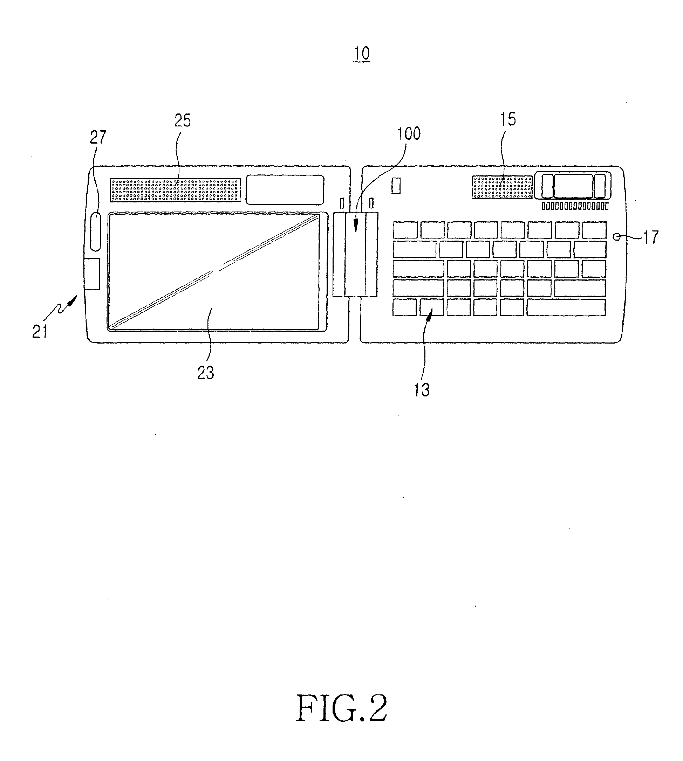

Referring to FIGs. 1 and 2, a portable terminal 10 having a hinge apparatus according to a first embodiment of the present invention includes a first housing 11, a second housing 21, and a hinge apparatus 100. The hinge apparatus 100 provides hinge axes A1 and A2, about which the first and second housings 11 and 21 can rotate, respectively, and has a stopper unit for limiting their rotation when they are folded on each other.

The first housing 11 has a keypad 13, a speaker device 15, and a transmitter unit 17 positioned on a surface thereof. The speaker device 15 and the transmitter unit 17 are positioned on the periphery of the keypad 13. The second housing 21 has a display device 23, a speaker device 25, and a receiver unit 27. The speaker device 25 and the receiver unit 27 are positioned on the periphery of the display device 23. By rotating the second housing 21, it is unfolded from the first housing 11 in an angular range of 0-180°. When the second housing 21 is fully unfolded, i.e. when it is at an angle of about 180° relative to the first housing 11, the speaker devices 15 and 25 are positioned symmetrically about the hinge apparatus 100. When the second housing 21 is folded on the first housing 11, the speaker devices 15 and 25 face each other.

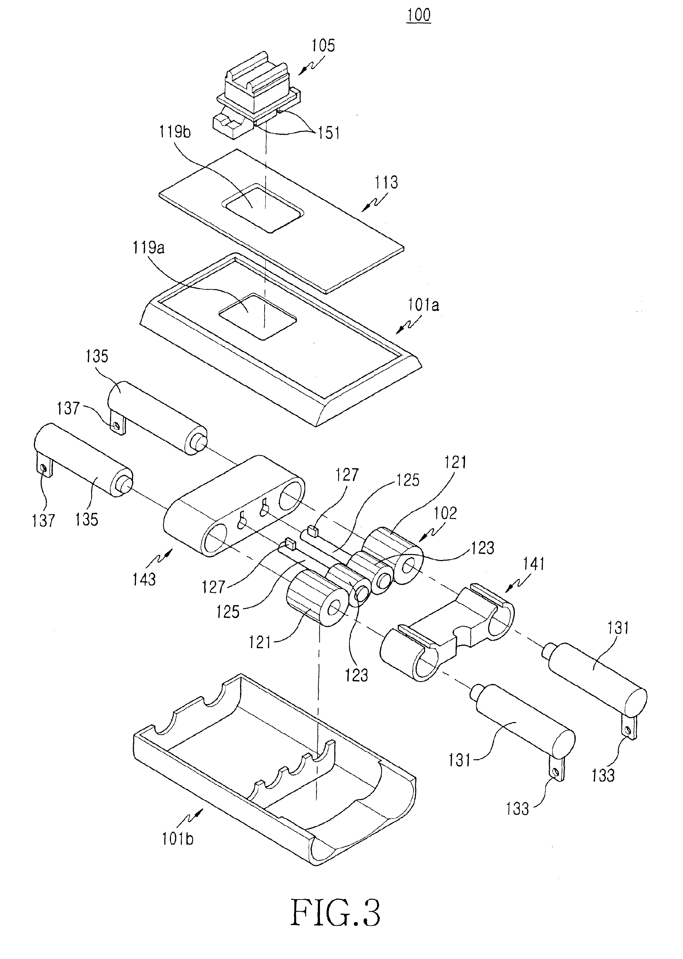

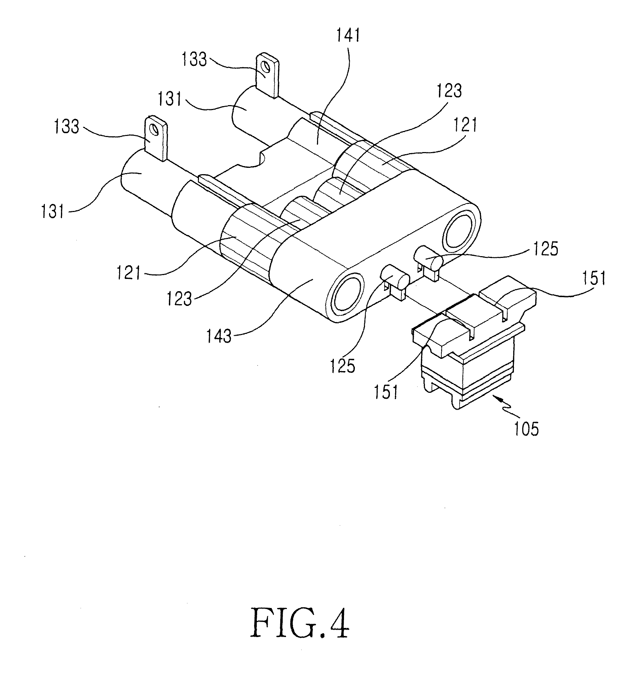

Referring to FIGs. 3 and 4, the hinge apparatus 100 has two pairs of gears 102, which are meshed successively, so that, when one of the first and second housings 11 and 21 rotates, the other rotates accordingly. In addition, the hinge apparatus 100 has a stopper unit so that, when the first and second housings 11 and 21 are folded on each other, their rotation is limited.

The hinge apparatus 100 includes a hinge housing for containing the gears 102, brackets 141 and 143, coupling shafts 131 and 135 for connecting the first and second housings 11 and 21 to each other, and a locker 105 for limiting the rotation of the gears 102.

The hinge housing includes an upper housing 101 a and a lower housing 101 b, which have structures formed therein for containing the gears 102, and the brackets 141 and 143. Particularly, the interior of the lower housing 101 b is shaped so as to rotatably contain the gears 102 and engage with the brackets 141 and 143.

After placing the gears 102 and the brackets 141 and 143 into the lower housing 102b and partially positioning the coupling shafts 131 and 134 therein, the upper housing 101 a is coupled to the lower housing 101 b. This completes the exterior of the hinge apparatus 100.

The locker 105 is coupled to the upper housing 101 a and is adapted to linearly reciprocate in the direction of extension of rotation axes of the gears 102. A cover plate 113 may be coupled to a surface of the upper housing 101 a for decoration. The upper housing 101 a and the cover plate 113 have through-holes 119a and 119b formed thereon, respectively, so that the locker 105 can be contained therein.

The gears 102 include a pair of first sun gears 121 and a pair of second sun gears 123 positioned between the first sun gears 121 so as to interlock them.

The first sun gears 121 are coupled to one of the first and second housings 11 and 21 via one of the coupling shafts 131 and 135. When one of the first and second housings 11 and 21 rotates, one of the first sun gears 121, which is coupled to an associated rotating housing, rotates accordingly. The second sun gears 123 transmit the movement of the rotating first sun gear 121 and rotate the other first sun gear 121. As such, when one of the first and second housings 11 and 21 rotates, the other housing rotates accordingly.

It is obvious to those skilled in the art that, although the first sun gears 121 are coupled to one of the first and second housings 11 and 21 via one of the coupling shafts 131 and 135 in the present embodiment, the first sun gears 121 may have integral shafts (not shown) extending from them so that they are coupled to the first and second housings 11 and 21 without using the coupling shafts 131 and 135. In other words, the coupling shafts 131 and 135 may be integral with the first sun gears 121.

The coupling shafts 131 and 135 may be classified into first coupling shafts 131 and second coupling shafts 135. The first coupling shafts 131 connect the first sun gears 121 to the first and second housings 11 and 21 at one end of the hinge housing. The second coupling shafts 135 are rotatably contained in the hinge housing, and are fixed to one of the first and second housings 11 and 21 at the other end of the hinge housing.

The first and second coupling shafts 131 and 135 have fastening pieces 133 and 137 extending from the outer peripheral surface of their end, respectively. The fastening pieces 133 and 137 are fastened into one of the first and second housings 11 and 21 so that the first and second coupling shafts 131 and 135 are rigidly fixed to the first and second housings 11 and 21, respectively.

Referring to FIG. 3, the fastening pieces 133 and 137 extend downwards from the outer peripheral surface of the first and second coupling shafts 131 and 133. When the hinge apparatus 100 is assembled as shown in FIG. 3, and the first and second housings 11 and 21 are coupled to each other via the hinge apparatus 100, the first and second housings 11 and 21 will be folded on each other.

First bracket 141 is positioned adjacent to the first coupling shafts 131 and second bracket 143 is positioned opposite them. Surfaces of the first and second brackets 141 and 143, which face each other, support both ends of the first and second sun gears 121 and 123, respectively. The first and second brackets 141 and 143 support the rotation of the first and second coupling shafts 131 and 135, respectively, so that the first and second housings 11 and 21 can rotate stably.

The construction of the stopper unit, which limits the rotation of the second sun gears 123 by means of the locker 105, will now be described.

The stopper unit includes a locker 105, stopper shafts 125 extending from the second sun gears 123 in parallel, respectively, and stopper pieces 127 extending from the outer peripheral surface of ends of the stopper shafts 125 in parallel.

When the hinge apparatus 100 is assembled, the stopper pieces 127 are positioned adjacent to the locker 105. As the locker 105 linearly moves on the upper housing 101 b in the direction of extension of the stopper shafts 125 in that condition, a portion of the locker 105 may interfere with the stopper pieces 127. In order to avoid such interference, the locker 105 has locker recesses 151 formed on its lower surface. When the locker 105 is about to interfere with the stopper pieces 127, the locker recesses 151 and the stopper pieces 127 engage each other.

When the first and second housings 11 and 21 are folded on each other, the stopper pieces 127 are positioned parallel to each other and face opposite the fastening pieces 133 and 137 of the first and second coupling shafts 131 and 135, as shown in Fig. 3. The locker recesses 151 engage with the stopper pieces 127 only when the stopper pieces 127 are positioned parallel to each other, i.e. when the first and second housings 11 and 21 are folded on each other. The engagement between the locker recesses 151 and the stopper pieces 127 limits the rotation of the stopper shafts 125, including the stopper pieces 127, and the second sun gears 123.

In this case, the second sun gears 123 are meshed with the first sun gears 121, and their rotation is limited. As a result, the first and second housings 11 and 21 do not rotate any further and stably remain folded on each other. When the user wants to unfold the first and second housings 11 and 21 from each other, he/she linearly moves the locker 105 and releases the stopper pieces 127 from the locker recesses 151.

As such, the stopper unit limits the rotation of the stopper pieces 127 by using the locker 105 when the first and second terminals 11 and 21 of the terminal 10 are folded on each other. This limits the rotation of the first and second sun gears 121 and 123, as well as that of the first and second housings 11 and 21. Therefore, once the housings 11 and 21 of the terminal 10 are folded on each other, the stopper unit prevents them from unfolding or having play between them.

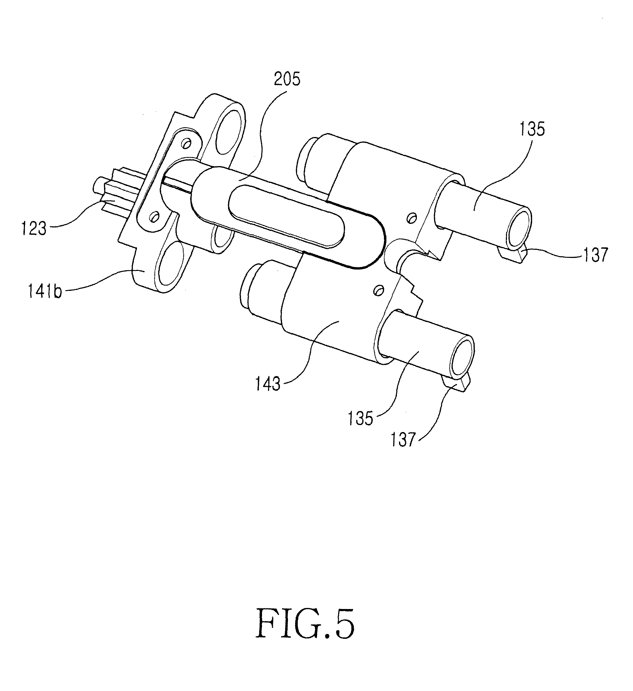

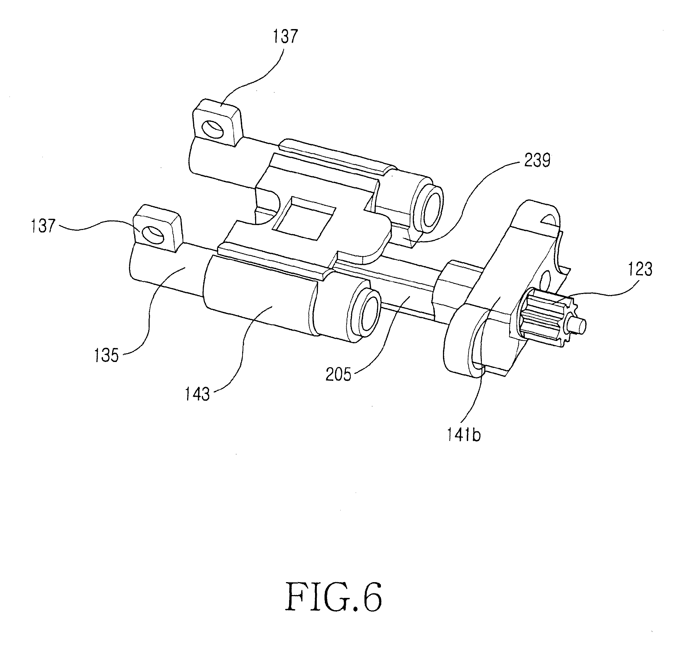

FIGs. 5 to 10 show the construction of major components of a hinge apparatus 200 according to a second embodiment of the present invention. The hinge apparatus 200 according to the second embodiment has the same construction as that of the hinge apparatus 100 according to the first preferred embodiment, except for the stopper for limiting the rotation of the first and second housings 11 and 21 when they are folded on each other. Therefore, the same components are given the same reference numerals, and repeated description thereof will be omitted for clarity.

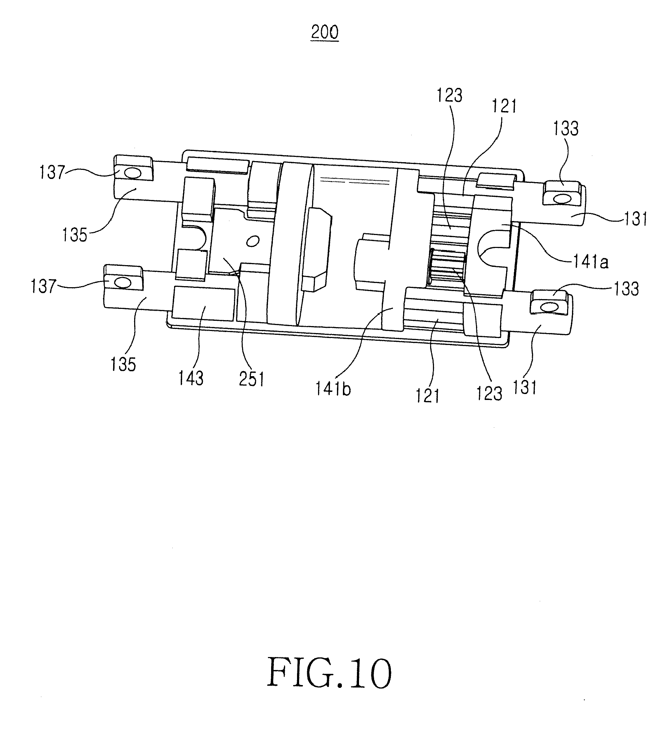

The hinge apparatus 200, as shown in FIG. 10, has first brackets 141 a and 141 b positioned on both ends of the first and second sun gears 121 and 123, respectively, so as to support them. The first bracket 141 a also supports the first coupling shafts 131.

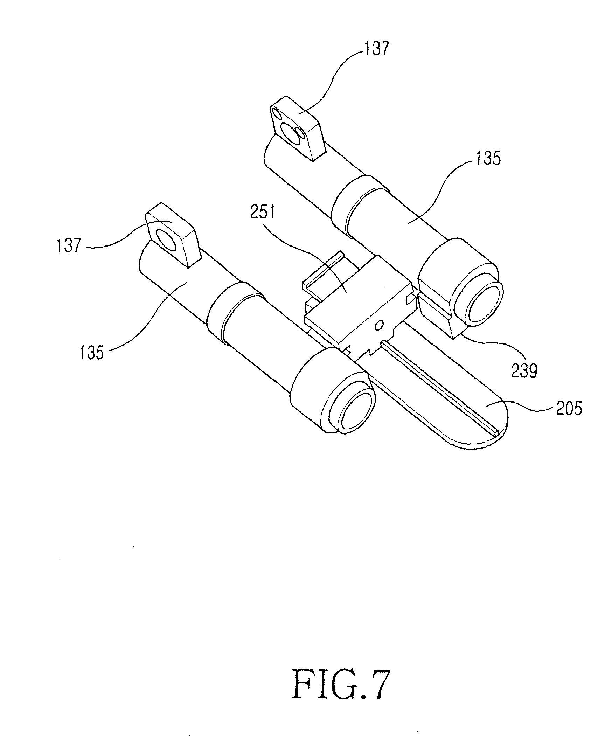

Referring to FIGs. 7 to 9, the stopper unit of the hinge apparatus 200 includes a locker 205 provided with a locker body 251 on its lower surface and adapted to move linearly on the hinge housing 200, as well as stopper protrusions 239 extending from the outer peripheral surface of the other end of the second coupling shafts 135. Although the locker body 251 is described as a component separate from the locker 205 in the present embodiment, the locker body 251 may be integral with the locker 205 and protrude from it.

When the first and second housings 11 and 21 are folded on each other, the stopper protrusions 239 face each other. When the first and second housings 11 and 21 are rotated away from each other, the stopper protrusions 239 are rotated so that their ends approach each other.

The locker 205 is adapted to move linearly in the direction of extension of the first and second coupling shafts 131 and 135. As a result of the linear movement, the locker body 251 is possibly positioned between the stopper protrusions 239.

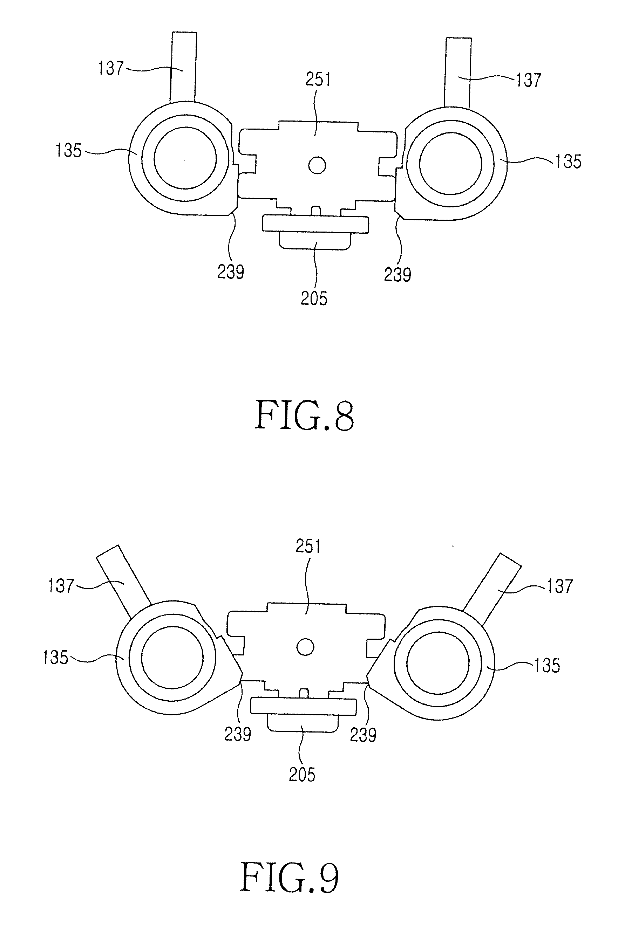

The locker body 251 is positioned between the stopper protrusions 239 only when the stopper protrusions 239 face each other as shown in FIG. 8, i.e. when the first and second housings 11 and 21 are folded on each other.

When the locker body 251 is positioned between the stopper protrusions 239, any rotation of the first and second housings 11 and 21 is limited by the interference between the locker body 251 and the stopper protrusions 239. This means that the first and second housings 11 and 21 can freely rotate only when the locker body 251 does not interfere with the stopper protrusions 239.

Referring to FIG. 9, the locker 205 has moved linearly so that the first and second housings 11 and 21 can rotate so as to unfold from each other without interference between the locker body 251 and the stopper protrusions 239. As a result, the ends of the fastening pieces 133 and 137 move away from each other.

In summary, the stopper unit of the hinge apparatus 200 according to the present embodiment has stopper protrusions 239 partially protruding from the outer peripheral surface of the second coupling shafts 135 so as to interfere with the outer peripheral surface of the locker 205, particularly the locker body 251. Therefore, this stopper unit has better structural stability than the stopper unit of the previous embodiment, which has stopper pieces 127 adapted to interfere with the locker recesses 151.

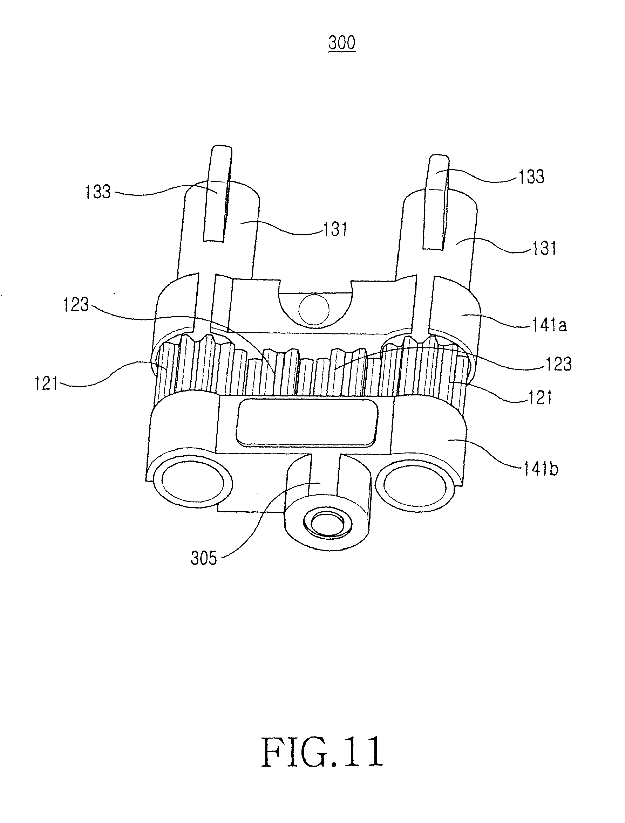

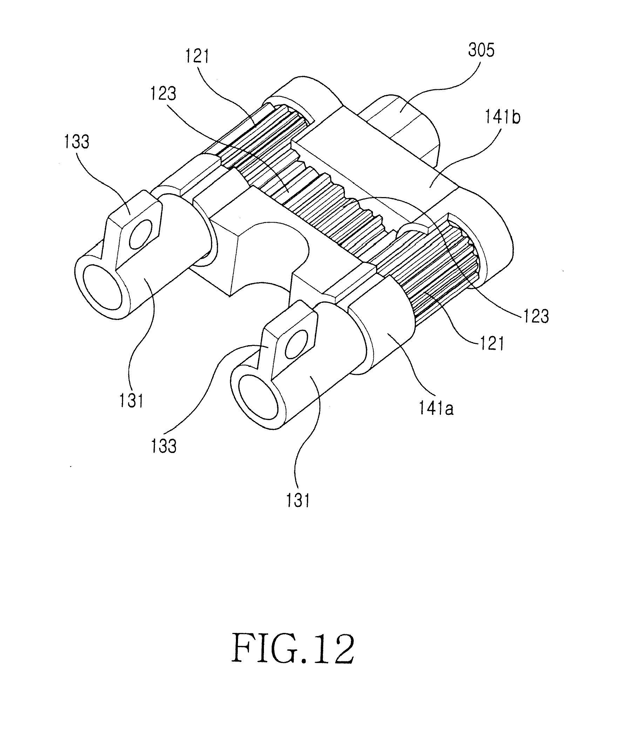

FIGs. 11 to 12 show major components of a hinge apparatus 300 according to a third preferred embodiment of the present invention. The hinge apparatus 300 according to the present embodiment has the same construction as in the case of the previous embodiments, except for the stopper for limiting the rotation of the first and second housings when they are folded on each other. Therefore, the same components are given the same reference numerals, and repeated description thereof will be omitted for clarity.

The stopper unit of the hinge apparatus 300 for a portable terminal according to the third embodiment has a stopper module 305 mounted on one of the first brackets 141 a and 141 b, which support the first and second sun gears 121 and 123.

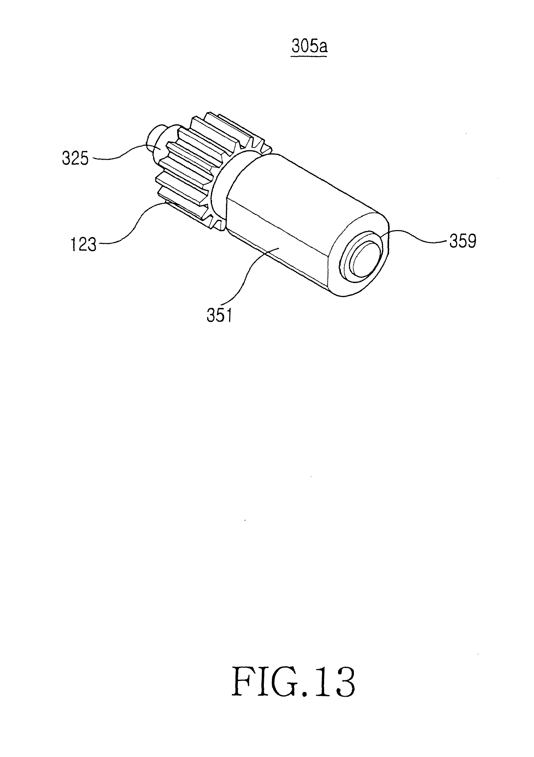

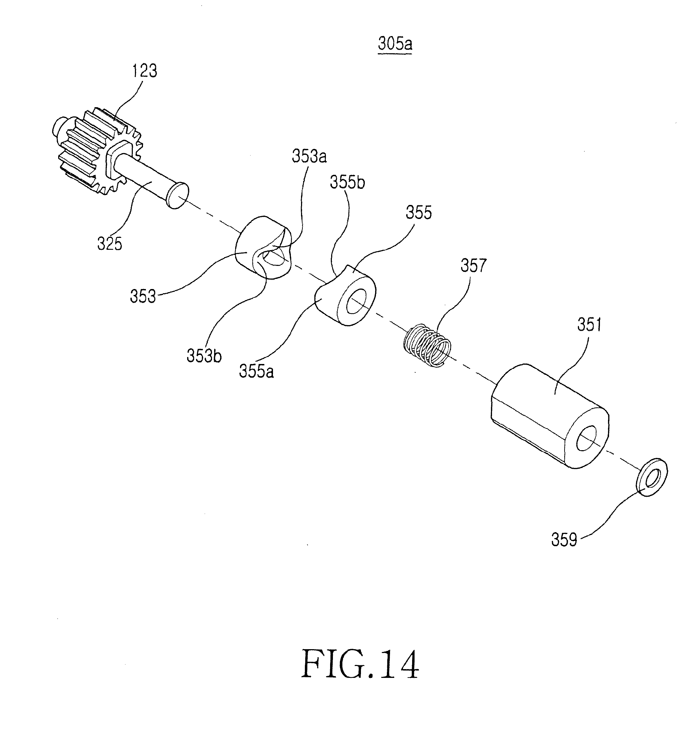

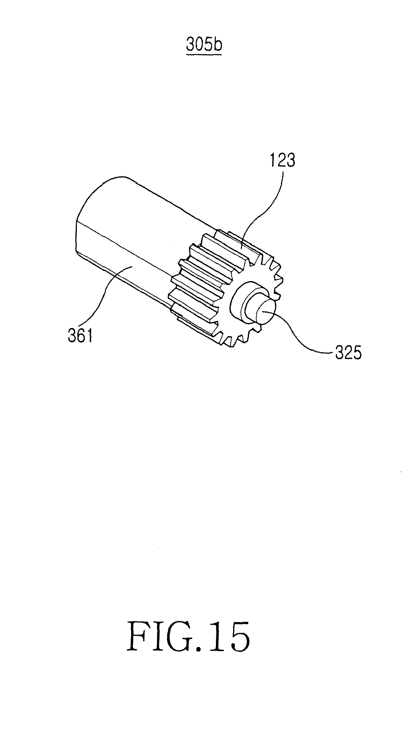

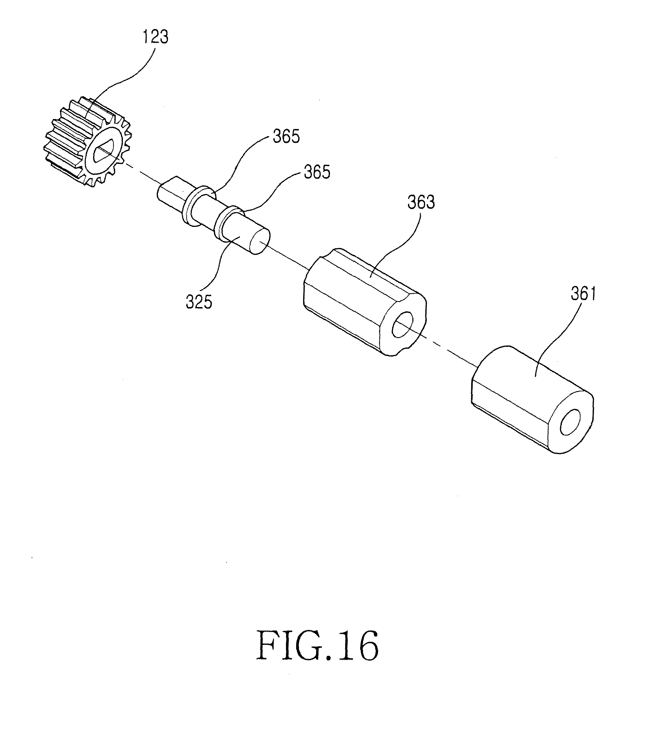

The stopper module 305 is connected to one of the second sun gears 123. According to a desired operation mode, the stopper module 305 may be a cam-type stopper module 305a, as shown in FIGS. 13 and 14, or a friction-type stopper module 305b, as shown in FIGS. 15 and 16.

Referring to FIGS. 13 and 14, the cam-type stopper module 305a includes a connection shaft 325 extending from one of the second sun gears 123, a first cam 353 mounted on the connection shaft 325 so as to rotate together with the second sun gear 123, a second cam 355 adapted to move linearly on the connection shaft 325, and an elastic member 357 for exerting elastic force in such a direction that the second cam 355 is forced against the first cam 353. The elastic force from the elastic member 357 causes the second cam 355 to make sliding contact with the first cam 353 while facing it.

In order to contain the first and second cams 353 and 355 and the elastic member 357, and constitute a module, the stopper module 305a has a stopper housing 351. Particularly, the stopper housing 351 successively contains the elastic member 357, the second cam 355, and the first cam 353. The connection shaft 325 extends through the stopper housing 351 and protrudes from an end of the stopper housing 351. An E-ring 359 is fastened to an end of the connection shaft 325 and constrains the connection shaft 325 on the stopper housing 351.

The elastic member 357 has an end supported on the second cam 355 and the other end supported on the inner wall of the stopper housing 351 so as to provide the second cam 355 with elastic force.

The first cam 353 is adapted to rotate together with one of the second sun gears 123. The second cam 355 is adapted to move linearly on the connection shaft 325 while receiving elastic force from the elastic member 357. As a result, friction force is generated between the first and second cams 353 and 355 that limits the rotation of the second sun gears 123, as well as that of the first sun gears 121, which engage with the second sun gears 123 and rotate together with them. Consequently, the friction force between the first and second cams 353 and 355 suppresses the rotation of the first and second housings 11 and 21 over their entire range of rotation.

This means that the friction force between the first and second cams 353 and 355 still acts even when the first and second housings 11 and 21 are folded on each other and limits their unwanted rotation.

The first and second cams 353 and 355 have crests 353a and 355a and troughs 353b and 355b formed thereon, respectively, so as to generate driving force in such a direction that the first and second housings 11 and 21 are forced against each other, when they are folded on each other.

Referring to FIG. 14, the first cam 353 has a pair of first crests 353a and a pair of first troughs 353b alternating with each other along the circumference of the first cam 353, as well as slanted surfaces formed between them, respectively. The second cam 355 has a pair of second crests 355a and a pair of second troughs 355b alternating with each other along the circumference of the second cam 355, as well as slanted surfaces formed between them, respectively.

The second crests 355a and the second troughs 355b are positioned so as to face the first crests 353a and the first troughs 353b, respectively. When the first and second crests 353a and 355a are disengaged from the second and first troughs 355b and 353b, respectively, the second cam 355 rotates and causes the first and second crests 355a and 355a to engage with the second and first troughs 355b and 353b, respectively. This is because the elastic force, which forces the second cam 355 against the first cam 353, is converted into rotational force by the arrangement of the crests 353a and 355a and the troughs 353b and 355b of the first and second cams 353 and 355.

When the stopper module 305 is assembled to the hinge apparatus 300, the first and second crests 353a and 355a preferably remain disengaged from or engaged with the second and first troughs 355b and 353b, respectively, when the first and second housings 11 and 21 are folded on each other. When the first and second crests 353a and 355a are disengaged from the second and first troughs 355b and 353b, the rotational force generated by the stopper module 305a forces the first and second housings 11 and 21 against each other during assembly.

Particularly, when the first and second housings 11 and 21 are folded on each other, the stopper module 305a either exerts rotational force in such a direction that the first and second housings 11 and 21 are forced against each other, or causes the first and second crests 353a and 355a to remain engaged with the second and first troughs 355b and 353b, respectively. As such, the stopper module 305a causes the first and second housings 11 and 21 to remain stably folded on each other.

Referring to FIGs. 15 and 16, the friction-type stopper module 305b has stopper disks 365 mounted on the connection shaft 325 so as to generate frictional force, when rotating inside the stopper housing 361, and suppress the rotation of the first and second housings 11 and 21. Particularly, the friction-type stopper module 305b according to the alternative embodiment has a pair of stopper disks 365 and a stopper bracket 363 contained in the stopper housing 361.

Although the stopper disks 365 have different diameters, the inner diameter of the stopper bracket 363 is determined so as to correspond to the diameter of the stopper disks 365. This generates frictional force. It can be easily understood by those skilled in the art that one of the stopper disks 365 may be positioned so as to make sliding contact with the inner wall of an end of the stopper bracket 363 while facing it, in order to generate the frictional force.

The stopper disks 365 rotate together with one of the second sun gears 123 with their outer peripheral surface making contact with the inner wall of the stopper bracket 363 and generate the frictional force, which suppresses the rotation of the first and second housings 11 and 21.

Regardless of whether the stopper bracket 363 is used, the friction-type stopper module 305b can generate frictional force by using damping oil, which fills the stopper housing 361. Particularly, when the stopper disks 365 rotate inside the stopper housing 361, the damping oil, which fills the stopper housing 361, generates the frictional force and suppresses that rotation. As a result, the rotation of the first and second housings 11 and 21 is suppressed.

When the first and second housings 11 and 21 are rotated so as to unfold from each other, the friction-type stopper module 305b limits the rotation of the first and second housings 11 and 21 by means of the frictional force between the stopper disks 365 and the inner wall of the stopper bracket 363 or that between the stopper disks 365 and the damping oil. As a result, the frictional force from the friction-type stopper module 305b causes the first and second housings 11 and 21 to remain folded on each other.

As mentioned above, the hinge apparatus for a portable terminal according to the present invention couples a pair of housings to each other so that they can rotate towards or away from each other and, when they are folded on each other, the stopper unit suppresses their rotation. This improves the structural stability of the terminal. In addition, the housings are adapted to rotate about different hinge axes by means of two pairs of sun gears so that, when one of the housings rotates, the other rotates accordingly. This diversifies the design of the terminal.

While the invention has been shown and described with reference to certain preferred embodiments thereof, it will be understood by those skilled in the art that various changes in form and details may be made therein without departing from the scope of the invention as defined by the appended claims.

## Claims

1. A hinge apparatus (100, 200, 300) for coupling a pair of housings (11, 12) of a portable terminal (10) to each other so that the housings can rotate and unfold from each other, the apparatus comprising:
first sun gears (121) coupled to the housings (11, 12), respectively;
second sun gears (123) positioned between the first sun gears (121) so as to interlock the first sun gears, and
a stopper unit connected to at least one of the first and second sun gears (121, 123) and adapted to suppress rotation of the first and second sun gears, when the housings are folded on each other and facing each other, such that rotation of the housings is limited.

2. The hinge apparatus according to claim 1, wherein the stopper unit comprises:
stopper shafts (125) extending from the second gears (123) in parallel;
stopper pieces (127) extending from an outer peripheral surface of an end of the stopper shaft, and
a locker (105) horizontally movable in a direction of extension of the stopper shafts, the locker having locker recesses (151) formed on a surface, wherein the stopper pieces (127) are adapted to engage with the locker recesses (151) when the housings are folded on each other and are released from the locker recesses (151) by horizontal movement of the locker (105).

3. The hinge apparatus according to claim 1, wherein the stopper unit comprises:
coupling shafts (131, 135) coupled to the housings (11, 12), and adapted to rotate together with the first sun gears (121);
stopper protrusions (239) extending from an outer peripheral surface of the coupling shafts, and
a locker (205) adapted to move horizontally in a direction of extension of the coupling shafts (131, 135), wherein the locker is adapted to interfere with the stopper protrusions when the housings are folded on each other to limit rotation of the housings and interference is released after horizontal movement of the locker.

4. The hinge apparatus according to claims 2 or 3, wherein the stopper pieces (127, 239) extend in parallel to each other when housings are folded on each other.

5. The hinge apparatus according to claim 1, wherein the stopper unit comprises:
a connection shaft (325) extending from one of the sun gears (123);
a first cam (353) connected to an end of the connection shaft so as to rotate together with one of the second sun gears;
a second cam (355) adapted to make sliding contact with the first cam while facing the first cam, and
an elastic member (357) adapted to exert elastic force in such a direction that the second cam is forced against the first cam, wherein the first and second cams are adapted to apply elastic force in such a direction that the housings are forced against each other, when the housings are folded on each other, by means of the elastic force of the elastic member.

6. The hinge apparatus according to claim 4, wherein the stopper unit further comprises:
first crests (353a) and first troughs (353b) formed on a surface of the first cam (353) so as to alternate with each other along a circumference of the first cam, and
second crests (355a) and second troughs (355b) formed on a surface of the second cam (355) so as to alternate with each other along a circumference of the second cam, the second crests and the second troughs facing the first crests and the first troughs, wherein the first crests are positioned on slanted surfaces between the second crests and the second troughs and the second crests are positioned on slanted surfaces between the first crests and the first troughs, when the housings are folded on each other.

7. The hinge apparatus according to claim 1, wherein the stopper unit comprises:
a connection shaft (325) extending from one of the second sun gears (123),
at least one stopper disk (365) positioned on the connection shaft (325), and
a stopper housing (361) coupled to the connection shaft so as to enclose the connection shaft, the stopper disk being contained in the stopper housing, wherein the stopper disk is adapted to generate frictional force inside the stopper housing, at least when the housings are folded on each other, such that rotation of the housings is limited.

8. The hinge apparatus according to claim 6, wherein the stopper housing (361) of the stopper unit is filled with damping oil so that friction between the damping oil and the stopper disk limits rotation of the housings.

9. The hinge apparatus according to claim 6, wherein a stopper bracket (363) is coupled inside the stopper housing (361) of the stopper unit such that frictional force between the stopper disk and an inner wall of the stopper bracket limits rotation of the housings.

10. The hinge apparatus according to one of the previous claims, wherein first and second sun gears are arranged in pairs.
